# EUROPÄISCHE PATENTSCHRIFT

(11) **EP 0 595 213 B1**
(45) Veröffentlichungstag und Bekanntmachung des Hinweises auf die Patenterteilung: **07.01.1999**
(21) Anmeldenummer: 93117123.5
(22) Anmeldetag: 22.10.1993
(51) Int. Cl.: B29C 65/20, G01L 5/00, B29L 7/00, B29L 23/22

(54) **Schweisseinrichtung**
Welding apparatus
Appareil de soudage

(30) Priorität: 28.10.1992 DE 9214574 U
(43) Veröffentlichungstag der Anmeldung: 04.05.1994
(73) Patentinhaber: WEGENER GmbH, D-52074 Aachen (DE)
(72) Erfinder: Weissfloch, Reinhard Dr. Ing., D-52074 Aachen (DE)
(74) Vertreter: Paul, Dieter-Alfred, Dipl.-Ing.

(56) Entgegenhaltungen:
- EP-A- 0 196 795
- WO-A-92/09419
- DE-A- 4 026 711
- GB-A- 2 038 436
- GB-A- 2 105 806
- GB-A- 2 191 976
- US-A- 4 348 908
- US-A- 4 491 027
- US-A- 5 013 376
- PLASTVERARBEITER Bd. 36, Nr. 10 , Oktober 1985 , SPEYER/RHEIN DE Seiten 86 - 94 H. POTENTE J. KREITER 'Rechnersteuerung beim Heizelement-stumpfschweissen'

## Beschreibung

Die Erfindung betrifft eine Schweißeinrichtung zum Verschweißen von Kunststoffwerkstücken, insbesondere Kunststoffplatten, mit zwei gegenüberliegenden, relativ zueinander beweglichen Spanneinrichtungen zum Fixieren und zum Zusammenführen der zu verschweißenden Kunststoffwerkstücke sowie mit einer Heizeinrichtung, zur Plastifizierung der Kunststoffwerkstücke an der Verbindungsstelle, wobei eine Antriebseinrichtung zur Erzeugung einer Antriebskraft vorgesehen ist, die über eine Krafteinwirkungsstrecke mit direkter Übertragung auf die Spanneinrichtung und über diese weiter auf die Kunststoffwerkstücke übertragbar ist, und wobei die Antriebseinrichtung mit einer Regeleinrichtung gekoppelt ist, welche die Antriebseinrichtung in Anpassung an vorgegebene Werte steuert.

Eine Schweißeinrichtung ist beispielsweise in der DE-OS 35 39 842 und dem DE-GM 85 31 748.9 beschrieben. Sie weist einen meist langgestreckten Grundrahmen auf, auf dessen Oberseite zwei sich jeweils in Längsrichtung parallel erstreckende Spanneinrichtungen angeordnet sind. Diese Spanneinrichtungen sind mit Hilfe einer Antriebseinrichtung in Querrichtungen synchron, jedoch gegenläufig bewegbar und bestehen im wesentlichen jeweils aus einem in Längsrichtung sich erstreckenden Spanntisch und einem darüber angeordneten, sich ebenfalls in Längsrichtung erstreckenden Spannbalken, wobei jeder Spannbalken mit einer Vielzahl von in Längsrichtung nebeneinander angeordneten, auf den zugehörigen Spanntisch absenkbaren Spannplatten versehen ist.

Im Bereich zwischen den beiden Spanneinrichtungen ist ein sich in Längsrichtung erstreckendes Heizschwert für die Erhitzung der miteinander zu verbindenden Stirnseiten der Kunststoffwerkstücke angeordnet. Das Heizschwert ist mit einem Anschlagbalken versehen.

Ein Schweißvorgang auf einer solchen Schweißeinrichtung wird dadurch eingeleitet, daß die Spanneinrichtungen gegen den in den Spalt eingefahrenen Anschlagbalken verfahren werden, wobei sie jeweils an verbreiterten Abschnitten zur Anlage kommen und auf diese Weise den Anschlagbalken zusätzlich ausrichten. Es werden dann die Kunststoffwerkstücke in die Spanneinrichtungen derart eingelegt, daß sie an dem Anschlagbalken zur Anlage kommen. Nach Festklemmen der Kunststoffwerkstücke - es kann sich auch um ein einzelnes, dann rohrförmiges Werkstück handeln - durch Absenken der Spannplatten gegen den jeweiligen Spanntisch werden die Spanneinrichtungen auseinandergefahren, und das Heizschwert so weit abgesenkt, daß es in der Spannebene liegt. Die Spanneinrichtungen werden anschließend wieder zueinander bewegt, bis die Kunststoffwerkstücke mit ihren zu verbindenden Stirnseiten an dem Heizschwert anliegen. Sie erhitzen sich an dem Heizschwert und werden dann nach Wegfahren des Heizschwertes unter Aufbringung eines Schließdruckes durch die Spanneinrichtungen gegeneinandergepreßt. Nach dem Erkalten ist die Verbindung zwischen den Kunststoffwerkstücken fertig.

Zum Verschweißen von Kunststoffwerkstücken aus einem faserverstärkten Thermoplast ist die vorbeschriebene Schweißeinrichtung insoweit modifiziert worden, als zwei übereinander angeordnete, sich parallel zum Spalt zwischen den Spanneinrichtungen erstreckende Heizschwerter vorgesehen sind (vgl. DE-OS-39 13 723). Die Kunststoffwerkstücke werden bei einem Schweißvorgang zunächst zur Überlappung gebracht, wobei zuvor entsprechende Überlappungsstege in die Stirnseiten eingeformt worden sind. Die Heizschwerter werden dann von beiden Seiten auf den Überlappungsbereich der Kunststoffwerkstücke aufgesetzt, wodurch der Überlappungsbereich plastifiziert wird. Gleichzeitig wird mit den Heizschwertern Druck auf den Überlappungsbereich ausgeübt.

Für die Antriebseinrichtung werden parallel zueinander angeordnete, pneumatisch betriebene Druckzylinder verwendet, die jeweils auf ein Paar von Antriebshebeln wirken, welche synchron, jedoch gegenläufig zueinander bewegbar sind, wobei je ein Antriebshebel mit je einer Spanneinrichtung verbunden ist. Für jedes Paar von Antriebshebeln können auch zwei Druckzylinder vorgesehen sein (vg. DE-OS-35 39 842). Dabei erfolgt die Druckbeaufschlagung in den Druckzylindern mit Hilfe eines Proportionalventils als Drucksteller, das von einer Steuereinrichtung mit vorgegebenen Werten für den Druck versorgt wird. Dies geschieht insbesondere in Abhängigkeit von der Dicke und dem Materials der Kunststoffwerkstücke, wobei insbesondere zeitabhängig gesteuerte Druckwerte zur Erzeugung eines Anschmelzdruckes bei der Anlage der Kunststoffwerkstücke an der Heizeinrichtung und zur Erzeugung eines Schließdruckes beim Zusammenfügen der zu verbindenden Stirnseiten der Kunststoffwerkstücke erzeugt werden.

Eine gattungsgemäße Schweißeinrichtung ist der EP-A-0 196 795 zu entnehmen. Bei dieser Schweißeinrichtung wird eine bewegliche Spanneinrichtung, die ein Rohrende hält, durch eine hydraulische Zylinder/Kolben-Einheit gegen eine feststehende Spanneinrichtung, welche das andere Rohrende hält, bewegt. Dabei wird der Hydraulikdruck, der notwendig ist, um die bewegliche Spanneinrichtung in Bewegung zu setzen, erfaßt und dem vorgesehenen Druck für die Plastifizierung des Rohrendes und dem Druck für die Verschweißung hinzuaddiert. Der Druck wird hierfür in einem Computer gespeichert.

Ähnliche Lösungen sind in der US-A-5 013 376 und der GB-A-2 191 976 offenbart. Auch bei diesen Schweißeinrichtungen wird der Hydraulikdruck erfaßt, der zum Starten der Bewegung der Spanneinrichtung notwendig ist.

Der Hydraulikdruck einer Antriebseinrichtung ist jedoch nicht genau analog zu der Kraft, die in der Kraftwirkungsstrecke aufgebracht werden muß. Drosseleffekte in den Leitungen des Hydrauliksystems sowie Flexibilität insbesondere in flexiblen Schläuchen des Hydrauliksystems beeinflussen den aufgewendeten Druck nicht unerheblich. Auch mit diesen Schweißeinrichtungen sind reproduzierbare Schweißergebnisse häufig nicht erreichbar.

Daneben sind Schweißeinrichtungen bekannt, bei denen die Spanneinrichtungen nicht direkt mit der Kraftwirkungsstrecke verbunden sind, sondern schwimmend auf Unterschlitten gelagert sind, wobei die Unterschlitten hydraulisch angetrieben sind (Potente, Kreiter, Rechnersteuerung beim Heizelementstumpfschweißen, Zeitschrift 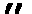 Plastverarbeiter", 1985, Nr. 10; DE-A-40 26 711). Die Spanneinrichtungen stützen sich über Kraftmeßeinrichtungen an den Untertischen ab. Vorteilhaft ist dabei, daß auf diese Weise die Fügekraft direkt gemessen wird, und zwar im wesentlichen ohne Verfälschung durch Reibungskräfte.

Der vorstehende Vorzug muß jedoch mit einem erheblichen konstruktiven Aufwand erkauft werden. Solche Schweißeinrichtungen sind wegen der schwimmenden Lagerung der Spanneinrichtung teuer.

Der Erfindung liegt deshalb die Aufgabe zugrunde, eine Schweißeinrichtung der eingangs genannten Art so auszubilden, daß mit vertretbarem konstruktiven Aufwand einwandfreie Schweißergebnisse mit hoher Zuverlässigkeit erreicht werden.

Diese Aufgabe wird erfindungsgemäß dadurch gelöst, daß wenigstens eine Kraftmeßeinrichtung in der Kraftwirkungsstrecke zwischen Antriebseinrichtung und Spanneinrichtung zur Erfassung der dort bei der Bewegung der Spanneinrichtungen herrschenden Antriebskraft vorgesehen und mit der Regeleinrichtung gekoppelt ist, daß die Regeleinrichtung die Antriebskrafterzeugung in der Antriebseinrichtung in Abhängigkeit von der gemessenen Antriebskraft steuert, daß die Regeleinrichtung eine Einrichtung bei Ansteuerung eines Meßzyklus' aufweist, bei dem die Spanneinrichtungen mit eingespannten Kunststoffwerkstücken zueinander bewegt werden und dabei die Antriebskraft für diese Bewegung durch die Kraftmeßeinrichtung(en) erfaßt wird, und daß die so erfaßte Antriebskraft den für die nachfolgenden Prozesse vorgegebenen Werten für die Antriebskraft hinzuaddiert wird.

Nach der Erfindung wird also die in einem bestimmten Punkt der Krafteinwirkungstrecke wirkende Antriebskraft erfaßt und als Regelgröße für die Ansteuerung der Antriebseinrichtung verwendet. Diesem Gedanken liegt die schon zur Erfindung gehörende Erkenntnis zugrunde, daß die in der Antriebseinrichtung erzeugte Antriebskraft in der Kraftwirkungsstrecke zu den Kunststoffwerkstücken verschiedenen Einflüssen unterliegt, die zu einer Herabsetzung der schließlich an den Kunststoffwerkstücken aufgeprägten Kraft führt und dann ein schlechtes Schweißergebnis zur Folge haben kann. Die Kraftwirkungsstrecke setzt sich dabei aus den verschiedenen Übertragungselementen, beginnend beim Krafterzeugungselement bis zum Kunststoffwerkstück, zusammen. Die Verminderung der am Kunststoffwerkstück aufgeprägten Kraft kann dabei schon mit dem Drucksteller, der ein elektrisches Stellsignal der Regelung in pneumatischen Druck umsetzt, beginnen, und zwar durch Alterung oder auch Defekt. Auch ein Druckzylinder, wenn er für die Antriebseinrichtung verwendet wird, hat nicht immer den gleichen Wirkungsgrad, wodurch entsprechende Streuungen bei der Druckerzeugung entstehen. Dabei kann sich der Wirkungsgrad auch aufgrund sich ändernder Gleit- und Haftreibungsverhältnisse innerhalb der Druckzylinder im Laufe der Zeit ändern. In der Krafteinwirkungstrecke selbst können ebenfalls Schwankungen in der Krafterzeugung auftreten, beispielsweise durch baulich bedingte Ungenauigkeiten der Kraftübertragungselemente, wie beispielsweise wirksame Länge der Hebelarme etc. Kraftverluste entstehen darüber hinaus in den Spanneinrichtungen durch Gleit- und Haftreibung der Spanntische und der Auslegearme, auf denen die Kunststoffwerkstücke aufliegen. Ferner entstehen unterschiedliche Bewegungswiderstände durch die Masse und die Eigenspannung und der zu verschweißenden Kunststoffwerkstücke. Dies führt zu einer erheblichen Streuung der tatsächlich an den Kunststoffwerkstücken wirkenden Kräfte zur Aufbringung des Anschmelz- und Schließdruckes mit entsprechenden Folgen für das Schweißergebnis.

Die Einrichtung zur Erzeugung des Meßzyklus' sollte so ausgebildet sein, daß er automatisch vor der Erhitzung der Kunststoffwerkstücke gestartet wird. Mit diesem Merkmal der Erfindung ist also ein zusätzlicher Bewegungsablauf mit eingespannten Kunststoffwerkstücken vorgesehen. Bei diesem Bewegungsablauf werden dann durch die Kraftmeßeinrichtung(en) diejenigen Kräfte ermittelt, die insbesondere für die Überwindung der Haft- und Gleitreibung in Bereich der Spanneinrichtungen sowie durch die Masse und Eigenspannung der Kunststoffwerkstücke zu überwinden sind. Da bei ihrer Nichtberücksichtigung die Antriebskräfte entsprechend gemindert würden, werden die durch diesen Bewegungsablauf gemessenen Kräfte den vorgegebenen Werten hinzuaddiert. Dies hat zur Folge, daß die Antriebseinrichtung über die Regeleinrichtung so angesteuert wird, daß eine entsprechend größere Kraft erzeugt wird. Hierdurch ist gesichert, daß die erzeugten Anschmelz- und Schließdrücke im wesentlichen konstant sind und die Schweißergenisse keinen Schwankungen unterliegen.

Mit der Erfindung werden - in Abhängigkeit von der Anordung der Kraftmeßeinrichtung(en) - eine Reihe der vorgenannten Einflußgrößen erfaßt und entsprechend ausgeregelt. Dies gilt insbesondere für Schwankungen beim Drucksteller und in der Antriebseinrichtung selbst. Sofern - wie nach der Erfindung vorgeschlagen - die Kraftmeßeinrichtung(en) am Kraftübergang zur Spanneinrichtung angeordnet wird bzw. werden, werden auch die Einflüsse zwischen der Antriebseinrichtung und der Kraftmeßeinrichtung(en) in der Krafteinwirkungsstrecke erfaßt und ausgeregelt. Damit wird die Streuung der an den Kunststoffwerkstücken aufgeprägten Kräfte wesentlich herabgesetzt und werden die Schweißergebnisse entsprechend günstig beeinflußt.

In weiterer Ausgestaltung der Erfindung ist vorgesehen, daß die Krafteinwirkungsstrecke in parallele Teilstrecken aufgeteilt und jede Teilstrecke eine Kraftmeßeinrichtung zugeordnet ist, wobei die gemessenen Antriebskräfte in der Regeleinrichtung addiert werden. Dabei sollten die Kraftmeßeinrichtungen einer Spanneinrichtung zugeordnet sein. Eine solche Ausbildung kann dann mit einer Fehlererkennungseinrichtung kombiniert werden, die den Ausfall von zumindest einer Kraftmeßeinrichtung erfaßt und eine Abschaltung der Antriebseinrichtung und/oder eine Signalmeldung, beispielsweise optisch oder akustisch, bewirkt. Es versteht sich, daß eine solche Fehlererkennungseinrichtung auch erweitert werden kann, beispielsweise auf den Totalausfall des Druckstellers oder - bei mehrteiliger Antriebseinrichtung - eines der Antriebselemente.

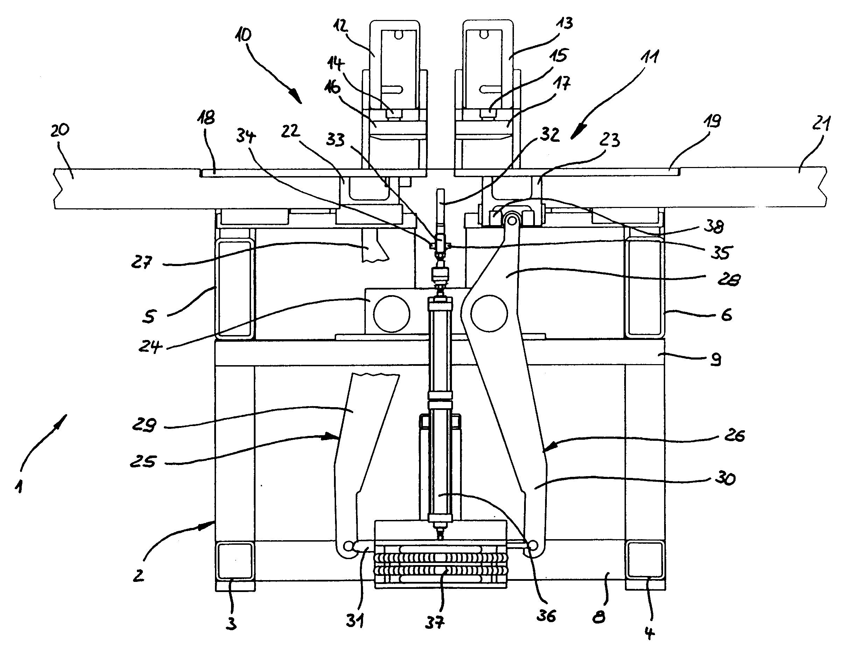

In der Zeichnung ist die Erfindung anhand eines Ausführungsbeispiels näher veranschaulicht. Sie zeigt die stirnseitige Ansicht einer Schweißeinrichtung (1).

Die Schweißeinrichtung (1) hat einen sich senkrecht zur Zeichnungsebene lang erstreckenden Grundrahmen (2) mit dazu parallelen unteren Längsholmen (3, 4), oberen Längsholem (5, 6) sowie mit quer dazu verlaufenden unteren Querholmen (8) und oberen Querholmen (9).

Auf der Oberseite des Grundrahmens (2) befinden sich zwei ebenfalls in Längsrichtung, d. h. senkrecht zur Zeichnungsebene erstreckende Spanneinrichtungen (10, 11). Sie weisen obenseitig jeweils einen Spannbalken (12, 13) auf. Die Spannbalken (12, 13) haben eine Vielzahl von pneumatisch betriebenen Teleskopzylindern - beispielshaft mit (14) bzw. (15) bezeichnet -, an denen jeweils eine Spannplatte (16, 17) aufgehängt ist. Untenseitig haben die Spanneinrichtungen (10, 11) den Spannplatten (16, 17) jeweils gegenüberliegende Spanntische (18, 19) mit Spanntischverlängerungen (20, 21). Mit jedem Spanntisch (18, 19) ist jeweils ein im Querschnitt H-förmiger, sich ebenfalls über die gesamte Länge der Schweißeinrichtung (1) erstreckender Tischträger (22, 23) verbunden. Die Tischträger (22, 23) sind in Längsrichtung verteilt an mehreren Stellen über Linearführungseinrichtungen querverschieblich - also horizontal und quer zur Längserstreckung der Schweißeinrichtung (1) - gelagert. Die Enden der Tischträger (22, 23) sind mit den Enden der zugehörigen Spannbalken (12) bzw. (13) verbunden, so daß sich die Spannbalken (12) bzw. (13) jeweils mit dem zugehörigen Spanntisch (18) bzw. (19) bewegen.

Auf den oberen Querholmen (9) befinden sich hintereinander aufgereiht drei Lagerböcke (24), an denen jeweils Paare von Antriebshebeln (25, 26) schwenkbar gelagert sind. Über hier nicht näher dargestellte Zahnräder sind sie derart miteinander verbunden, daß die Bewegung jedes Paares von Antriebshebeln (25, 26) so synchronisiert ist, daß sich die Antriebshebel (25, 26) immer gegenläufig bewegen und spiegelbildliche Stellungen einnehmen.

Die oberen Arme (27, 28) jedes Paares von Antriebshebeln (25, 26) - der linke obere Arm (27) ist in Figur (1) teilweise weggelassen - greifen in untenseitige Öffnungen der jeweils zugehörigen Tischträger (22, 23) ein, und zwar in der Weise, daß eine formschlüssige Gelenkverbindung entsteht. Die unteren Arme (29, 30) der Antriebshebel (25, 26) sind über pneumatische Antriebszylinder (31) verbunden. Ein Auseinanderfahren der unteren Arme (29, 30) der Antriebshebel (25, 26) durch Druckbeaufschlagung der Antriebszylinder (31) hat entsprechend der beschriebenen Kinematik zur Folge, daß die Spanneinrichtungen (10, 11) zueinander bewegt werden.

Unterhalb der durch die Oberseite der Spanntische (18, 19) definierten Spannebene verläuft senkrecht zur Zeichnungsebene ein langgestrecktes Heizschwert (32) rechteckigen Querschnitts. Es sitzt auf einem Anschlagbalken (33), an dessen Längsseitenflächen Anschlagleisten (34, 35) befestigt sind. Der Anschlagbalken (33) ruht auf mehreren hintereinander angeordneten Führungsstangen (36), deren untere Enden mit einem Bulgzylinder (37) verbunden sind. Durch pneumatische Beaufschlagung der Bulgzylinder (37) kann das Heizschwert (32) mit dem Anschlagbalken (33) vertikal verfahren werden.

Am Tischträger (23) der in der Zeichnung rechten Spanneinrichtung (11) ist eine Kraftmeßdose (38) angeordnet, die von dem oberen Arm (28) des rechten Antriebshebels (26) beaufschlagt ist. Die anderen Paare von Antriebshebeln wirken jeweils auf eine entsprechend angeordnete, in der Zeichnung jedoch nicht sichtbare Kraftmeßdose. Die Kraftmeßdosen (38) wandeln die auf sie wirkenden Kräfte in entsprechende, elektrische Werte um, welche in eine hier nicht näher dargestellten Regeleinrichtung verarbeitet werden. Diese Regeleinrichtung wirkt auf einen hier ebenfalls nicht gezeigten Drucksteller in Form eines Proportionalventils. Dieses Proportionalventil steuert die von einer Druckluftquelle kommende Druckluftzufuhr zu den pneumatischen Antriebszylinder (31) und wandelt dabei ein von der Regeleinrichtung kommendes elektrisches Stellsignal in pneumatischen Druck um.

Das Verschweißen von zwei Kunststoffplatten geschieht mit Hilfe der vorbeschriebenen Schweißeinrichtung (1) wie folgt.

Zunächst werden die Spanneinrichtungen (10, 11) mit Hilfe der Antriebszylinder (31) und der Antriebshebel (25, 26) auseinandergefahren. Dann wird das Heizschwert (32) zusammen mit dem Anschlagbalken (33) hochgefahren. Das Hochfahren des Heizschwertes (32) geschieht so weit, daß die Anschlagleisten (34, 35) auf gleiche Höhe mit den Spanntischen (18, 19) zu liegen kommen. Die Spanneinrichtungen (10, 11) werden dann so weit zusammengefahren, bis die gegenüberliegenden Stirnseiten der Spanntische (18, 19) zur Anlage an den Anschlagleisten (34, 35) kommen. Über die Antriebszylinder (31) wird dann der Schließdruck aufgebracht, so daß der Anschlagbalken (33) gerade ausgerichtet wird.

Es wird nun von beiden Seiten je eine Kunststoffplatte in jede Spanneinrichtung (10, 11) eingelegt, und zwar zwischen den Spannplatten (16, 17) und den Spanntischen (18, 19). Dabei werden sie so weit vorgeschoben, bis sie am Anschlagbalken (33) oberhalb der Anschlagleisten (34, 35) anliegen. Die Kunststoffplatten stehen dann also entsprechend der Dicke der Anschlagleisten (34, 35) über die Stirnseiten der Spanntische (18, 19) vor. Durch Absenken der Spannplatten (16, 17), bewirkt durch die Druckbeaufschlagung der Teleskopzylinder (14, 15), werden dann die Kunststoffplatten in dieser Stellung festgeklemmt, so daß sie sich nicht mehr relativ zu den jeweils betreffenden Spanneinrichtungen (10, 11) bewegen können. Nach diesem Ausrichtvorgang werden die Spanneinrichtungen (10, 11) durch Betätigung der Antriebszylinder (31) und der Antriebshebel (25, 26) wieder auseinandergefahren. Gleichzeitig werden Heizschwert (32) und Anschlagbalken (33) soweit abgesenkt, daß das Heizschwert (32) in die Spannebene zwischen den Spanntischen (18, 19) zu liegen kommt.

Die Regeleinrichtung erzeugt nun einen Meßzyklus, bei der die Spanneinrichtungen (10, 11) jeweils um einen halben Hub zueinander bewegt werden. Während dieses Bewegungsvorgangs wird mit Hilfe der Kraftmeßdosen (38) die für die Bewegung aufzubringende Kraft erfaßt. Diese Kraft wird im wesentlichen zur Überwindung der Haft- und Reibungskräfte in den Linearlagerungen der Spanntische (18, 19) sowie der Masse und eventueller Eingespannungen Kunststoffplatten - beispielsweise wenn es sich um Wandungen eines Hohlkörpers handelt - benötigt und reduzieren deshalb die von den Antriebshebeln (25, 26) bei anschließenden Bewegungen, insbesondere zur Erzeugung des Anschmelz- und Schließdruckes, übertragende Kraft. Die gemessenen Kraftwerte werden dann in der Regeleinrichtung in der Weise verarbeitet, daß sie vorgegebenen Grundwerten, die beispielsweise einprogrammiert sein können, hinzuaddiert werden. Für die nachfolgenden Bewegungen wird dann das von der Regeleinrichtung auf den Drucksteller gegebene Stellsignal entsprechend korrigiert und angepaßt.

Nach diesem Meßzyklus werden die Spanneinrichtungen (10, 11) durch entsprechende Ansteuerung der Antriebszylinder (31) zueinander bewegt, bis die überstehenden Kanten der zu verbindenden Kunststoffplatten an dem Heizschwert (32) zur Anlage kommen. Es wird ein definierter Anschmelzdruck erzeugt, wodurch die zu verbindenden Stirnseiten der Kunststoffplatten auf eine entsprechende Temperatur erhitzt und in einen plastischen Zustand versetzt werden. Dabei ist durch die vorbeschriebene Regeleinrichtung und die Einschiebung des Meßzyklus' gesichert, daß der Anschmelzdruck, der am Heizschwert (32) wirkt, unabhängig von der Art der Kunststoffwerkstücke den Vorgaben entspricht und immer gleichbleibend ist.

Nach der Plastifizierung werden die Spanneinrichtungen (10, 11) mit den eingeklemmten Kunststoffplatten nochmals auseinandergefahren, damit das Heizschwert (32) aus der Spannebene nach unten abgesenkt werden kann. Anschließend werden die Spanneinrichtungen (10, 11) wieder so weit zueinander gefahren, bis sich die plastifizierten Kanten der Kunststoffplatten berühren. Es wird dann ein Schließdruck aufgebracht. Die Steigerung des Schließdruckes wird dabei von dem Drucksteller, also dem Proportionalventil, entsprechend einem vorgegebenen, für die jeweilige Kunststoffart obtimalen Zeitprogramm gesteuert. Dabei ist durch die vorbeschriebene Regeleinrichtung gesichert, daß eventuelle Kraftverluste von den Antriebszylinder (31) bis zu den Kraftmeßdosen (38) erfaßt und ausgeregelt bzw. korrigiert werden. Zusätzlich erfolgt eine Addition der in dem oben beschriebenen Meßzyklus erfaßten Bewegungskräfte. Dies hat zur Folge, daß der tatsächlich an den Kunststoffwerkstücken wirkende Schließdruck den Vorgaben entspricht.

Nach Beendigung des Schweißvorganges werden die Spanneinrichtungen (10, 11) durch die Antriebszylinder (31) auseinandergefahren. Die nunmehr zusammengeschweißte Kunststoffplatte kann dann seitlich aus der Schweißeinrichtung (1) herausgenommen werden. Handelt es sich bei dem Kunststoffwerkstück nach dem Verschweißen um ein geschlossenes Formstück, beispielsweise ein mehrkantiges Rohrstück, so kann das Kunststoffwerkstück nach Lösen einer Verriegelung zwischen Spannbalken (12, 13) und Spanntisch (18, 19) senkrecht zur Zeichnungsebene herausgezogen werden.

## Patentansprüche

1. Schweißeinrichtung zum Verschweißen von Kunststoffwerkstücken, insbesondere Kunststoffplatten, mit zwei gegenüberliegenden, relativ zueinander bewegbaren Spanneinrichtungen (10, 11) zum Fixieren und Zusammenführen der zu verschweißenden Kunststoffwerkstücke sowie mit einer Heizeinrichtung (32) zur Plastifizierung der Kunststoffwerkstücke an der Verbindungsstelle, wobei eine Antriebseinrichtung (31) zur Erzeugung einer Antriebskraft vorgesehen ist, die über eine Kraftwirkungsstrecke mit direkter Übertragung auf die Spanneinrichtung (10, 11) und über diese weiter auf die Kunststoffwerkstücke übertragbar ist, und wobei die Antriebseinrichtung (31) mit einer Regeleinrichtung gekoppelt ist, welche die Antriebseinrichtung in Anpassung an vorgegebene Werte steuert,
**dadurch gekennzeichnet,** daß wenigstens eine Kraftmeßeinrichtung (38) in der Kraftwirkungsstrecke zwischen Antriebseinrichtung (31) und Spanneinrichtung (10, 11) zur Erfassung der dort bei der Bewegung der Spanneinrichtungen (10, 11) herrschenden Antriebskraft vorgesehen und mit der Regeleinrichtung gekoppelt ist, daß die Regeleinrichtung die Antriebskrafterzeugung in der Antriebseinrichtung (31) in Abhängigkeit von der gemessenen Antriebskraft steuert, daß die Regeleinrichtung eine Einrichtung bei Ansteuerung eines Meßzyklus' aufweist, bei dem die Spanneinrichtungen (10, 11) mit eingespannten Kunststoffwerkstücken zueinander bewegt und dabei die Antriebskraft für diese Bewegung durch die Kraftmeßeinrichtung(en) (38) erfaßt werden, und daß die so erfaßte Antriebskraft den für die nachfolgenden Prozesse vorgegebenen Werten für die Antriebskraft hinzuaddiert wird.

2. Schweißeinrichtung nach Anspruch 2,
dadurch gekennzeichnet, daß die Kraftmeßeinrichtung(en) (38) am Kraftübergang zur Spanneinrichtung (10, 11) angeordnet ist bzw. sind.

3. Schweißeinrichtung nach Anspruch 1 oder 2,
dadurch gekennzeichnet, daß die Kraftwirkungsstrecke in parallele Teilstrecken aufgeteilt und jeder Teilstrecke eine Kraftmeßeinrichtung (38) zugeordnet ist, wobei die gemessenen Antriebskräfte in der Regeleinrichtung addiert werden.

4. Schweißeinrichtung nach Anspruch 3,
dadurch gekennzeichnet, daß die Kraftmeßeinrichtungen (38) einer Spanneinrichtung (10, 11) zugeordnet sind.

5. Schweißeinrichtung nach Anspruch 3 oder 4,
dadurch gekennzeichnet, daß die Regeleinrichtung eine Fehlererkennungseinrichtung aufweist, die den Ausfall von zumindest einer Kraftmeßeinrichtung (38) erfaßt und ein Abschalten der Antriebseinrichtung (31) und/oder eine Signalmeldung bewirkt.

6. Schweißeinrichtung nach einem der Ansprüche 1 bis 5,
dadurch gekennzeichnet, daß die Einrichtung zur Erzeugung des Meßzyklus' so ausgebildet ist, daß der Meßzyklus' automatisch vor der Erhitzung der Kunststoffwerkstücke gestartet wird.

## Claims

1. Welding apparatus for welding plastic workpieces, in particular plastic plates, comprising two clamping devices (10, 11), which are positioned opposite each other and displaceable relative to each other, for fixing and bringing together plastic workpieces to be welded, and a heating device (32) for plastification of the plastic workpieces at the joint, and a drive mechanism (31) is provided for generating a drive load which is transferable via a load transfer path with direct transfer to the clamping device (10, 11) and via the latter onto the plastic workpieces, and the drive mechanism (31) is coupled to a regulating device which controls the drive direction to match specified values, **characterised in that** at least one load measuring device (38) is provided in the load transfer path between drive mechanism (31) and clamping device (10, 11) for the purpose of detecting the drive load present thereat during movement of the clamping devices (10, 11) and coupled to the regulating device, and the regulating device controls the drive load generation in the drive mechanism (31) in dependence of the measured drive load, and that the regulating device comprises a device when applying a measuring cycle during which the clamping devices (10, 11) with clamped plastic workpieces are moved towards each other, and the drive load for this movement is detected by the load measuring device(s) (38), and a thus detected drive load is added to values for the drive force offered for subsequent processes.

2. Welding apparatus according to Claim 2, **characterised in that** the load measuring device(s) (39) is/are configured at the point of load transfer to the clamping device (10, 11).

3. Welding apparatus according to Claim 1 or 2, **characterised in that** the load transfer path is divided into parallel path portions, and each path portion is associated with a load measuring device (38), and the measured drive loads are added in the regulating device.

4. Welding apparatus according to Claim 3, **characterised in that** the load measuring devices (38) are associated with a clamping device (10, 11).

5. Welding apparatus according to Claim 3 or 4, **characterised in that** the regulating device comprises an error detection device which detects failure of at least one load measuring device (38) and causes the drive mechanism (31) to be switched off and/or gives a signal report.

6. Welding apparatus according to one of Claims 1 to 5, **characterised in that** the device for generating the measuring cycle is designed in such a manner that the measuring cycle is automatically started prior to heating of the plastic workpieces.

## Revendications

1. Appareil de soudage pour le soudage de pièces de plastique, en particulier de plaques de plastique, doté de deux dispositifs de serrage (10, 11) placés face à face et mobiles l'un par rapport à l'autre pour fixer et mettre bout à bout les pièces de plastique à souder, ainsi que d'un dispositif de chauffage (32) pour plastifier les pièces de plastique au point de jonction, dans lequel est prévu un dispositif d'entraînement (31) destiné à générer une force d'entraînement, laquelle peut, sur un trajet d'effet dynamique avec transmission directe, être transmise au dispositif de serrage (10, 11) et ultérieurement, par l'intermédiaire de celui-ci, aux pièces de plastique, et dans lequel le dispositif d'entraînement (31) est coupé à un dispositif de réglage, lequel commande le dispositif d'entraînement en accord avec des valeurs prédéfinies,
caractérisé en ce qu'au moins un dispositif dynamométrique (38) est prévu dans le trajet de l'effet dynamique entre le dispositif entraînement (31) et le dispositif de serrage (10, 11) pour capter la force d'entraînement existante à cet endroit lors du déplacement des dispositifs de serrage (10, 11), et couplé au dispositif de réglage, en ce que le dispositif de réglage commande la production de la force d'entraînement dans le dispositif d'entraînement (31) en fonction de la force d'entraînement mesurée, en ce que le dispositif de réglage comporte un dispositif de sélection d'un cycle de mesure, selon lequel les dispositifs de serrage (10, 11), une fois les pièces de plastique serrées, sont déplacés l'un par rapport à l'autre, la force d'entraînement pour ce mouvement étant ce faisant captée par le(s) dispositif(s) dynamométrique(s) (38), et en ce que la force d'entraînement ainsi captée est additionnée aux valeurs de force d'entraînement prédéfinies pour les processus suivants.

2. Appareil de soudage selon la revendication 1 caractérisé en ce que le(s) dispositif(s) dynamométrique(s) (38) est ou sont disposé(s) au point de transmission des forces vers le dispositif de serrage (10, 11).

3. Appareil de soudage selon la revendication 1 ou 2, caractérisé en ce que le trajet d'effet dynamique est séparé en trajets parties parallèles et en ce qu'il est affecté à chaque trajet partiel un dispositif dynamométrique (38), les forces d'entraînement mesurées étant ce faisant additionnées dans le dispositif de réglage.

4. Appareil de soudage selon la revendication 3, caractérisé en ce que les dispositifs dynamométriques (38) sont associés à un dispositif de serrage (10, 11).

5. Appareil de soudage selon la revendication 3 ou 4, caractérisé en ce que le dispositif de réglage comporte un dispositif de détection d'erreurs, qui identifie la défaillance d'au moins un dispositif dynamométrique (38) et provoque un arrêt du dispositif d'entraînement (31) et/ou la génération d'un signal.

6. Appareil de soudage selon l'une des revendications 1 à 5, caractérisé en ce que le dispositif destiné à produire le cycle de mesure est conçu de façon à ce que le cycle de mesure soit lancé automatiquement avant le chauffage des pièces de plastique.
